# EUROPÄISCHE PATENTANMELDUNG

(11) **EP 1 726 501 A1**
(43) Veröffentlichungstag der Anmeldung: **29.11.2006**
(21) Anmeldenummer: 06113063.9
(22) Anmeldetag: 25.04.2006
(51) Int. Cl.: B60W 30/16, B60K 31/00

(54) **Geschwindigkeits- und Abstandsregler mit Stop & Go Funktion**

(30) Priorität: 17.05.2005 DE 102005022680
(71) Anmelder: ROBERT BOSCH GMBH, 70442 Stuttgart (DE)
(72) Erfinder: Kroehnert, Andre, 61672, Marbach (DE); Boecker, Juergen, 70176, Stuttgart (DE)

(57) **Zusammenfassung**

Geschwindigkeits- und Abstandsregler für Kraftfahrzeuge, der in einem Standard-Betriebsmodus (16) eine Stop & Go Funktion aufweist, mit einer Abstandssensorik (10) und einer Zusatzsensorik (14) für die Stop & Go Funktion, gekennzeichnet durch eine Überwachungseinrichtung (22) zur Überwachung der Funktionsfähigkeit der Zusatzsensorik (14) und eine Schalteinrichtung (20) zum Umschalten in einen eingeschränkten Betriebsmodus (18) ohne Stop & Go Funktion, wenn die Zusatzsensorik nicht funktionsfähig ist.

## Beschreibung

### Stand der Technik

Die Erfindung betrifft einen Geschwindigkeits- und Abstandsregler für Kraftfahrzeuge, der in einem Standard-Betriebsmodus eine Stop & Go Funktion aufweist, mit einer Abstandssensorik und einer Zusatzsensorik für die Stop & Go Funktion.

Geschwindigkeits- und Abstandsregler, auch als ACC-Systeme bezeichnet (Adaptive Cruise Control), ermöglichen es, die Geschwindigkeit des Fahrzeugs automatisch auf eine vom Fahrer gewählte Wunschgeschwindigkeit zu regeln, sofern sich kein langsameres vorausfahrendes Fahrzeug auf der eigenen Spur befindet, oder, wenn von der Abstandssensorik, beispielsweise ein Radarsensor, ein vorausfahrendes Fahrzeug geortet wird, dieses Fahrzeug in einer so genannten Folgefahrt automatisch in einem angemessenen Abstand zu verfolgen. Die bisher im Einsatz befindlichen ACC-Systeme sind generell für Fahrten auf Autobahnen oder gut ausgebauten Landstraßen vorgesehen und lassen sich nur oberhalb einer bestimmten Mindestgeschwindigkeit von beispielsweise 30 km/h aktivieren.

Es sind jedoch ACC-Systeme mit einem erweiterten Funktionsumfang in Entwicklung, die beispielsweise die folgenden zusätzlichen Funktionen bieten: Folgefahrt bei sehr niedrigen Geschwindigkeiten (unterhalb von 30 km/h), Bremsen in den Stand, wenn das Vorderfahrzeug anhält, automatisches Halten des Fahrzeugs im Stand und gegebenenfalls automatisches Wiederanfahren, wenn der Verkehr es zuläßt. Diese erweiterte Funktionalität wird häufig zusammenfassend als Stop & Go Funktion bezeichnet.

Bei Fahrten mit sehr niedriger Geschwindigkeit und insbesondere beim automatischen Wiederanfahren aus dem Stand muß mit der Möglichkeit gerechnet werden, daß sich im Nahbereich unmittelbar vor dem Fahrzeug Hindernisse, z. B. Fußgänger befmden, die mit Hilfe der für längere Reichweiten ausgelegten Abstandssensorik nicht geortet werden können. Um beim Einsatz der Stop & Go Funktion eine hohe Verkehrssicherheit zu gewährleisten ist es deshalb zweckmäßig, zusätzlich zu der Abstandssensorik, die für die normale Abstandsregelfunktion benötigt wird, eine Zusatzsensorik vorzusehen, mit der solche Hindernisse im Nahbereich geortet werden können. Beispielsweise kann diese Zusatzsensorik durch einen kurzreichweitigen Radarsensor (SRR, Short Range Radar), Ultraschallsensoren, einen Videosensor oder dergleichen gebildet werden.

Da ACC-Systeme einem hohen Sicherheitsstandard genügen müssen, ist es grundsätzlich auch bekannt, solche Systeme mit Selbstüberwachungs- und Abschaltfunktionen auszustatten, so daß sich das System bei einem Ausfall oder einer Störung wesentlicher Komponenten automatisch abschaltet, häufig in Kombination mit einem Warnhinweis für den Fahrer.

### Vorteile der Erfindung

Durch die Erfindung mit den in Anspruch 1 angegebenen Merkmalen läßt sich erreichen, daß in Fällen, in denen lediglich die Zusatzsensorik von einem Ausfall oder einer Störung betroffen ist, die Funktionen des ACC-Systems in einem eingeschränkten Umfang weiterhin zur Verfügung stehen.

Zu diesem Zweck ist erfindungsgemäß eine Überwachungseinrichtung vorgesehen, die speziell die Funktionsfähigkeit der Zusatzsensorik überwacht, und wenn diese Überwachungseinrichtung einen Ausfall oder eine wesentliche Störung der Zusatzsensorik feststellt, bewirkt eine Schalteinrichtung das automatische Umschalten des ACC-Systems in einen eingeschränkten Betriebsmodus, in dem zwar die Stop & Go Funktion deaktiviert ist, die grundlegenden Funktionen des ACC-Systems aber weiterhin zur Verfügung stehen. Auf diese Weise werden einerseits eine hohe Verkehrssicherheit und andererseits eine erhöhte Robustheit und ein maximaler Fahrernutzen erreicht.

Vorteilhafte Ausgestaltungen und Weiterbildungen der Erfindung ergeben sich aus den Unteransprüchen.

Bevorzugt ist der Schalteinrichtung eine Fahrerschnittstelle zugeordnet, über die akustische und/oder optische Signale oder Mitteilungen an den Fahrer ausgegeben werden können, so daß der Fahrer über den jeweils zur Verfügung stehenden Funktionsempfang des Systems informiert wird und das Systemverhalten für ihn transparent gemacht wird. Bevorzugt sollten sich die akustischen und/oder optischen Signale, die auf das Umschalten in den eingeschränkten Betriebsmodus hinweisen, deutlich von sonstigen Signalen unterscheiden, die während des normalen Betriebs des ACC-Systems ausgegeben werden.

Im eingeschränkten Betriebsmodus stehen die grundlegenden Funktionen des ACC-Systems ähnlich wie die Funktionen eines herkömmlichen ACC-Systems ohne Stop & Go Funktion nur oberhalb einer bestimmten Mindestgeschwindigkeit zur Verfügung. Wenn in diesem Modus die Mindestgeschwindigkeit unterschritten wird, erfolgt bevorzugt eine Selbstabschaltung des Systems, verbunden mit einem Hinweis an den Fahrer, durch den der Fahrer aufgefordert wird, selbst die Kontrolle über das Fahrzeug zu übernehmen. Das gleiche gilt auch in den Fällen, in denen bei Ausfall der Zusatzsensorik die aktuelle Geschwindigkeit des Fahrzeugs unterhalb der Mindestgeschwindigkeit liegt.

Die Selbstabschaltung erfolgt in definierter Weise, unter Berücksichtigung der Belange der Verkehrssicherheit. Im einfachsten Fall wird das System nach Ausgabe der Übernahmeaufforderung vollständig abgeschaltet, so daß das Fahrzeug verzögert bzw. nicht anfährt, sofern nicht der Fahrer selbst das Gaspedal betätigt. Gemäß einer zweckmäßigen Weiterbildung bleibt das System insbesondere dann, wenn die Fahrzeuggeschwindigkeit größer als null ist, zumindest noch für eine Übergangszeit aktiv, um dem Fahrer Gelegenheit zu geben, selbst die Kontrolle zu übernehmen. Während dieser Übergangszeit sind jedoch vorzugsweise positive Beschleunigungen des Fahrzeugs unterdrückt, und damit ist auch ein automatisches Wiederanfahren des Fahrzeugs ausgeschlossen.

### Zeichnung

Ein Ausführungsbeispiel der Erfindung ist in den Zeichnungen dargestellt und in der nachfolgenden Beschreibung näher erläutert.

Es zeigen:
- Figur 1: ein Blockdiagramm eines erfindungsgemäßen ACC-Systems; und
- Figur 2: ein Flußdiagramm zur Erläuterung der Arbeitsweise des Systems.

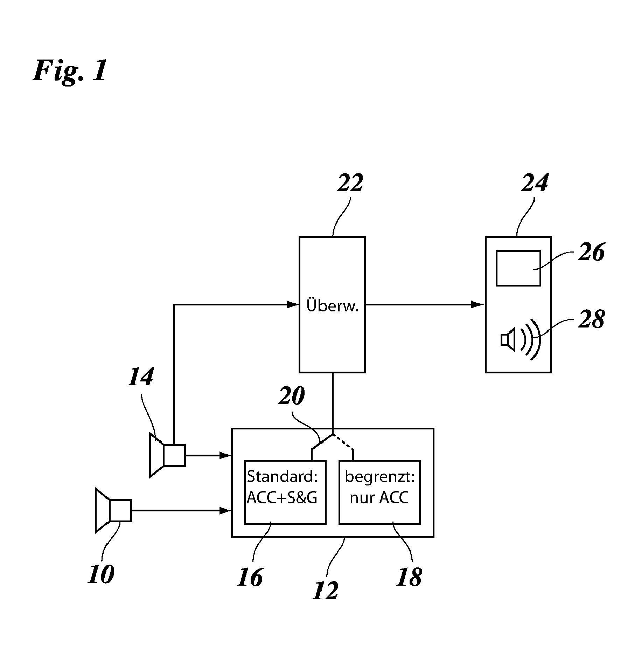

Figur 1 zeigt als vereinfachtes Blockdiagramm ein ACC-System mit einem langreichweitigen Abstandsradar 10 und einem ACC-Regler 12, der in bekannter Weise die Geschwindigkeits- und Abstandsregelfunktionen sowie die Stop & Go Funktion ausführt. Das Abstandsradar 10 dient als Abstandssensorik und stellt die Daten für die Abstandsregelung bereit. Als Zusatzsensorik ist ein Nahbereichsradar 14 vorgesehen, das das etwaige Objekte im unmittelbaren Vorfeld des Fahrzeugs ortet und zusätzliche Daten für die Stop & Go Funktion zur Verfügung stellt.

Ein Standard-Betriebsmodus 16 des ACC-Reglers 12 umfaßt die üblichen ACC- und Stop & Go Funktionen und ist in Figur 1 als Block dargestellt. Zusätzlich weist der ACC-Regler 12 einen eingeschränkten Betriebsmodus 18 auf, in dem lediglich die ACC-Funktionen zur Verfügung stehen, nicht jedoch die Stop & Go Funktion. Eine Schalteinrichtung 20 zum Umschalten zwischen diesen beiden Betriebsmodi ist in Figur 1 symbolisch als Schalter dargestellt. In der Praxis sind der Standard-Betriebsmodus 16, der eingeschränkte Betriebsmodus 18 und die Schalteinrichtung 20 als Software in einem elektronischen Datenverarbeitungssystem implementiert, das die Hardware des ACC-Reglers 12 bildet.

Die Schalteinrichtung 20 wird durch eine Überwachungseinrichtung 22 gesteuert, die die Funktionsfähigkeit des Nahbereichsradars 14 überwacht. Die Überwachung kann mit Hilfe bekannter Selbsttest-Routinen erfolgen, zumindest bei Antritt der Fahrt, bzw. bei Einschalten des ACC-Systems und vorzugsweise auch fortlaufend oder periodisch während des Betriebs des Systems im Standardmodus. Für eine fortlaufende Überwachung der Funktionsfähigkeit des Nahbereichsradars 14 kann auch der Umstand ausgenutzt werden, daß es zwischen dem Ortungsbereich des Abstandsradars 10 und des Nahbereichsradars 14 eine Überlappungszone gibt, in der Objekte bei voller Funktionsfähigkeit von beiden Sensoren geortet werden müssen. Wenn Objekte in dieser Zone lediglich vom Abstandsradar 10 aber nicht vom Nahbereichsradar 14 geortet werden, so kann auf Funktionsunfähigkeit des Nahbereichsradars 14 geschlossen werden, und die Überwachungseinrichtung 22 veranlaßt dann über die Schalteinrichtung 20 eine Umschaltung in den eingeschränkten Betriebsmodus 18.

Der Überwachungseinrichtung 22 ist eine Fahrerschnittstelle 24 zugeordnet, die im gezeigten Beispiel ein Display 26 zur Anzeige von Texten oder symbolischen Hinweisen sowie einen Lautsprecher 28 zur Ausgabe von Warnsignalen oder gegebenenfalls auch von gesprochenen Hinweisen umfaßt. Die Fahrerschnittstelle 24 kann auch für sonstige Funktionen des ACC-Systems genutzt werden, gestattet es jedoch, Hinweise, die sich auf das Umschalten vom Standard-Betriebsmodus 16 auf den eingeschränkten Betriebsmodus 18 beziehen, in einer von sonstigen Hinweisen oder Mitteilungen deutlich unterscheidbaren Form auszugeben.

Auch die Überwachungseinrichtung 22 und die Treiberfunktionen für die Fahrerschnittstelle 24 sind zweckmäßig als Software im ACC-Regler 12 implementiert.

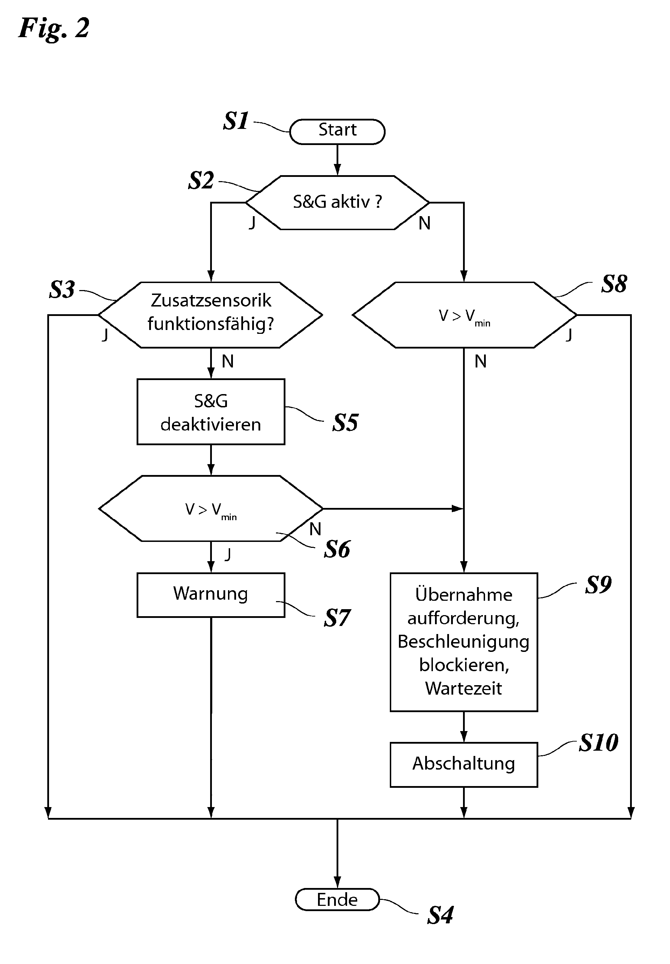

Anhand des in Figur 2 dargestellten Flußdiagramms sollen nun die Funktionen des oben beschriebenen ACC-Systems, die sich speziell auf die Überwachungseinrichtung 22 beziehen, näher erläutert werden.

Das Flußdiagramm beschreibt eine Programmroutine, die während des Betriebs des ACC-Systems periodisch durchlaufen wird. Nach dem Start der Routine mit Schritt S1 wird in Schritt S2 geprüft, ob die Stop & Go Funktion aktiv ist, d. h., ob diese Funktionalität zur Verfügung steht und sich das System somit im Standard-Betriebsmodus 16 befindet. Wenn dies der Fall ist, wird in Schritt S3 durch die Überwachungseinrichtung 22 geprüft, ob die Zusatzsensorik, hier das Nahbereichsradar 14, funktionsfähig ist. Wenn dies der Fall ist, also bei störungsfreiem Betrieb des Systems, wird die Routine mit Schritt S4 beendet.

Ist die Funktionsfähigkeit der Zusatzsensorik nicht gegeben, so wird von Schritt S3 nach Schritt S5 verzweigt, wo die Stop & Go Funktion deaktiviert wird. Dies entspricht einem Umschalten auf den eingeschränkten Betriebsmodus 18 mit Hilfe der Schalteinrichtung 20.

Anschließend wird in Schritt S6 geprüft, ob die aktuelle Geschwindigkeit V des Fahrzeugs oberhalb einer Mindestgeschwindigkeit Vₘᵢₙ (z. B. 30 km/h) liegt und somit die Einsatzbedingungen für die grundlegenden ACC-Funktionen gegeben sind. Wenn dies der Fall ist, hat der Ausfall der Zusatzsensorik noch keine unmittelbaren Auswirkungen auf die Funktion des Systems, und über die Fahrerschnittstelle 24 wird lediglich eine Warnung ausgegeben (Schritt S7), die den Fahrer vorbeugend darauf hinweist, daß die Stop & Go Funktion nicht mehr zur Verfügung steht.

Im Anschluß an Schritt S7 wird die Routine wieder mit Schritt S4 beendet.

Beim nächsten Aufruf der Routine (Schritt S1) wird dann in Schritt S2 festgestellt, daß die Stop & Go Funktion nicht mehr aktiv ist, und es erfolgt eine Verzweigung zu Schritt S8. Hier wird erneut die Bedingung V > Vₘᵢₙ geprüft, und wenn diese Bedingung erfüllt ist, kann die Geschwindigkeits- und Abstandsregelung im eingeschränkten Betriebsmodus fortgesetzt werden, und die Routine wird wieder mit Schritt S4 beendet.

Wenn dagegen in Schritt S8 oder in Schritt S6 festgestellt wird, daß die aktuelle Geschwindigkeit V unterhalb der Mindestgeschwindigkeit von beispielsweise 30 km/h liegt und somit die grundlegenden ACC-Funktionen nicht zur Verfügung stehen, wird in Schritt S9 die Ausgabe einer Übernahmeaufforderung über die Fahrerschnittstelle 24 veranlaßt. Weiterhin wird in Schritt S9 der Regelalgorithmus des ACC-Reglers 12 so modifiziert, daß keine Beschleunigungsbefehle an das Antriebssystem des Fahrzeugs mehr ausgegeben werden. Das heißt, die vom ACC-Regler ausgegebene Sollbeschleunigung kann nur noch kleiner oder gleich null sein, so daß das Fahrzeug allenfalls verzögert werden kann. Auch Eingriffe in das Bremssystem bleiben möglich, sofern sie im Rahmen der Abstandsregelung erforderlich sein sollten.

Schließlich wird in Schritt S9 noch ein Zeitgeber gestartet, der eine vorbestimmte Wartezeit abzählt. Durch diese Wartezeit soll dem Fahrer Gelegenheit gegeben werden, selbst die Kontrolle über das Fahrzeug zu übernehmen. Auf diese Weise wird verhindert, daß der Fahrer durch ein unerwartetes vollständiges Aussetzen der Geschwindigkeitsregelung überrascht wird und der Nachfolgeverkehr durch eine aus seiner Sicht unmotivierte Fahrzeugverzögerung irritiert wird.

Nach Ablauf der Wartezeit wird dann in Schritt S 10 der ACC-Regler 12 vollständig abgeschaltet, so daß das Fahrzeug ausrollt, sofern nicht der Fahrer selbst das Gaspedal betätigt.

Anschließend wird die Routine wieder mit Schritt S4 beendet.

Nachdem in Schritt S10 eine Selbstabschaltung des Systems erfolgt ist, kann der Fahrer durch Eingabe des üblichen Einschaltbefehls das ACC-System wieder aktivieren. Die Überwachungseinrichtung 22 ist jedoch vorzugsweise so ausgebildet, daß sie eine einmal festgestellte Funktionsunfähigkeit der Zusatzsensorik dauerhaft speichert, bis sie nach Beseitigung der Störung durch das Wartungspersonal wieder zurückgesetzt wird. Nach dem Wiedereinschalten des ACC-Systems wird somit in Schritt S3 sogleich wieder die Funktionsunfähigkeit der Zusatzsensorik festgestellt, und die Stop & Go Funktion wird in Schritt S5 wieder deaktiviert.

Falls die Fahrzeuggeschwindigkeit V zum Zeitpunkt der Wiedereinschaltung des ACC-Systems größer als 30 km/h ist, kann der Fahrer die eingeschränkte Funktion nutzen. In Schritt S7 erhält er dann erneut den Hinweis, daß die Stop & Go Funktion nicht zur Verfügung steht. In einer modifizierten Ausführungsform kann diese Warnung auch unterdrückt werden, sofern seit der letzten Ausgabe dieser Warnung nicht bereits eine längere Zeitspanne vergangen ist.

Ist die Geschwindigkeit bei dem Versuch, das ACC-System wieder einzuschalten, kleiner als 30 km/h, erfolgt über die Schritte S6, S9 und S 10 sofort wieder eine Selbstabschaltung des Systems. Auf diese Weise wird insbesondere auch ein automatisches Anfahren des Fahrzeugs verhindert, wenn die Zusatzsensorik nicht funktionsfähig ist.

## Patentansprüche

1. Geschwindigkeits- und Abstandsregler für Kraftfahrzeuge, der in einem Standard-Betriebsmodus (16) eine Stop & Go Funktion aufweist, mit einer Abstandssensorik (10) und einer Zusatzsensorik (14) für die Stop & Go Funktion, **gekennzeichnet durch** eine Überwachungseinrichtung (22) zur Überwachung der Funktionsfähigkeit der Zusatzsensorik (14) und eine Schalteinrichtung (20) zum Umschalten in einen eingeschränkten Betriebsmodus (18) ohne Stop & Go Funktion, wenn die Zusatzsensorik nicht funktionsfähig ist.

2. Geschwindigkeits- und Abstandsregler nach Anspruch 1, **dadurch gekennzeichnet, daß** der Überwachungseinrichtung (22) eine Fahrerschnittstelle (24) zugeordnet ist, über die bei Umschaltung aus dem Standard-Betriebsmodus (16) in den eingeschränkten Betriebsmodus (18) ein Hinweis an den Fahrer ausgebbar ist.

3. Geschwindigkeits- und Abstandsregler nach Anspruch 1 oder 2, **dadurch gekennzeichnet, daß** die Geschwindigkeits- und Abstandsregelfunktionen im eingeschränkten Betriebsmodus (18) nur oberhalb einer vorgegebenen Mindestgeschwindigkeit (Vₘᵢₙ) zur Verfügung stehen und daß in diesem eingeschränkten Betriebsmodus eine Selbstabschaltung für den Fall vorgesehen ist, daß die aktuelle Fahrzeuggeschwindigkeit (V) unterhalb der Mindestgeschwindigkeit (Vₘᵢₙ) liegt.

4. Geschwindigkeits- und Abstandsregler nach einem der vorstehenden Ansprüche, **dadurch gekennzeichnet, daß** die Überwachungseinrichtung (22) dazu ausgebildet ist, die Funktionsfähigkeit der Zusatzsensorik (14) während des Betriebs im Standard-Betriebsmodus (16) fortlaufend zu überwachen.

5. Geschwindigkeits- und Abstandsregler nach einem der vorstehenden Ansprüche, **dadurch gekennzeichnet, daß** die Überwachungseinrichtung (22) dazu ausgebildet ist, eine einmal festgestellte Funktionsunfähigkeit der Zusatzsensorik (14) auch bei Abschaltung des Geschwindigkeits- und Abstandsreglers gespeichert zu halten.
